# EUROPEAN PATENT APPLICATION

(11) **EP 4 556 515 A1**
(43) Date of publication of application: **21.05.2025**
(21) Application number: 24850311.2
(22) Date of filing: 05.08.2024
(51) Int. Cl.: C08J 11/16, C08F 14/18

(54) **METHOD FOR DECOMPOSING FLUORINE-CONTAINING POLYMERS**

(30) Priority: 01.09.2023 JP 2023142188; 11.04.2024 JP 2024063904
(71) Applicant: Daikin Industries, Ltd., Osaka-shi, Osaka 530-0001 (JP); Kanagawa University, Yokohama-shi, Kanagawa 221-8686 (JP)
(72) Inventor: NAKAUE, Ayane, Osaka-shi, Osaka 530-0001 (JP); MUKAE, Hirofumi, Osaka-shi, Osaka 530-0001 (JP); KISHIKAWA, Yosuke, Osaka-shi, Osaka 530-0001 (JP); HORI, Hisao, Yokohama-shi, Kanagawa 221-8686 (JP); HAMAURA, Jin, Yokohama-shi, Kanagawa 221-8686 (JP)
(74) Representative: Hoffmann Eitle
(86) International application number: PCT/JP2024/027944
(87) International publication number: WO 2025/047315

(57) **Abstract**

The disclosure aims to provide a method for decomposing a fluorine-containing polymer that can decompose a fluorine-containing polymer while suppressing generation of impurities after the decomposition reaction. The disclosure relates to a method for decomposing a fluorine-containing polymer, including a decomposition step including reacting a fluorine-containing polymer in subcritical water that is at a temperature of 180°C or higher and lower than 250°C and that contains at least one basic compound selected from the group consisting of alkali metal hydroxides and alkaline earth metal hydroxides at a concentration of 0.5 M or lower.

## Description

### TECHNICAL FIELD

The disclosure relates to methods for decomposing a fluorine-containing polymer.

### BACKPULVERIZED ART

Fluorine-containing polymers, which have high chemical stability and high thermal durability, not only need to be incinerated at high temperatures when disposed of as waste but also significantly deteriorate incinerator materials due to the hydrogen fluoride generated. This has led to a need for new waste disposal methods other than incineration or landfilling. For example, Patent Literatures 1 and 2 and Non-Patent Literature 1 disclose a method for decomposing a fluorine-containing polymer by reacting it in subcritical water containing a basic compound such as potassium hydroxide.

### CITATION LIST

### - Patent Literature

Patent Literature 1: JP 2021-155478 A
Patent Literature 2: JP 2023-066742 A

### - Non-Patent Literature

Non-Patent Literature 1: Jin Hamaura et al., Eur. Polym. J. 182 (2023), 111724

### SUMMARY OF INVENTION

### - Technical Problem

An object of the disclosure is to provide a method for decomposing a fluorine-containing polymer that can decompose a fluorine-containing polymer while suppressing generation of impurities after the decomposition reaction.

### - Solution to Problem

The disclosure (1) relates to a method for decomposing a fluorine-containing polymer, including a decomposition step including reacting a fluorine-containing polymer in subcritical water that is at a temperature of 180°C or higher and lower than 250°C and that contains at least one basic compound selected from the group consisting of alkali metal hydroxides and alkaline earth metal hydroxides at a concentration of 0.5 M or lower.

The disclosure (2) is the method for decomposing a fluorine-containing polymer according to the disclosure (1), wherein the temperature of the subcritical water in the decomposition step is 200°C or higher.

The disclosure (3) is the method for decomposing a fluorine-containing polymer according to the disclosure (1) or (2), wherein the fluorine-containing polymer is a fluororubber.

The disclosure (4) is the method for decomposing a fluorine-containing polymer according to the disclosure (3), wherein the temperature of the subcritical water in the decomposition step is 200°C or higher and 235°C or lower, the concentration of the at least one basic compound in the subcritical water is 0.10 M or higher and 0.35 M or lower, and the fluororubber is a copolymer of 50 to 80 mol% vinylidene fluoride and 50 to 20 mol% hexafluoropropylene.

The disclosure (5) is the method for decomposing a fluorine-containing polymer according to the disclosure (3) or (4), wherein the fluorine-containing polymer to be decomposed in the decomposition step is a cross-linked material of a composition containing the fluororubber.

The disclosure (6) is the method for decomposing a fluorine-containing polymer according to any combination with any one of the disclosures (1) to (5), wherein the method includes, before the decomposition step, a pulverization step of pulverizing the fluorine-containing polymer into pulverized particles having a maximum linear length of 3 mm or less.

The disclosure (7) is the method for decomposing a fluorine-containing polymer according to any combination with any one of the disclosures (1) to (6), wherein the at least one basic compound is at least one of sodium hydroxide or potassium hydroxide.

The disclosure (8) is the method for decomposing a fluorine-containing polymer according to any combination with any one of the disclosures (1) to (7), wherein the method includes, after the decomposition step, a recovery step of recovering calcium fluoride generated by adding calcium hydroxide to an aqueous solution after the decomposition.

### - Advantageous Effects of Invention

The disclosure can provide a method for decomposing a fluorine-containing polymer that can decompose a fluorine-containing polymer while suppressing generation of impurities after the decomposition reaction.

### DESCRIPTION OF EMBODIMENTS

The disclosure is described in detail below.

The disclosure relates to a method for decomposing a fluorine-containing polymer, including a decomposition step including reacting a fluorine-containing polymer in subcritical water that is at a temperature of 180°C or higher and lower than 250°C and that contains at least one basic compound selected from the group consisting of alkali metal hydroxides and alkaline earth metal hydroxides at a concentration of 0.5 M or lower. With such a step, the method for decomposing a fluorine-containing polymer of the disclosure can decompose a fluorine-containing polymer while suppressing generation of impurities after the decomposition reaction.

The fluorine-containing polymer containing basic compound is treated in subcritical water in the disclosure. This presumably causes the basic compound to abstract hydrogen fluoride (HF) from the polymer to initiate decomposition of the polymer. In this mechanism, a polymer free from hydrogen atoms, such as polytetrafluoroethylene (PTFE), would presumably be difficult to decompose by the disclosure. Thus, polymers free from hydrogen atoms are preferably exempted from the application of the disclosure.

Also in the disclosure, decomposition seemingly starts with abstraction of HF from the polymer as described above, which consequently removes fluorine atoms from the polymer but does not completely decompose the polymer to carbon dioxide. Even such decomposition that does not completely decompose the polymer to carbon dioxide is encompassed by decomposition of a polymer in the disclosure since fluorine atoms are at least removed from the polymer.

Subcritical water refers to the liquid water under pressure at temperatures above 100°C and below its critical temperature, 374°C. Subcritical water has a nature different in physical properties from water at 100°C or lower. Specifically, subcritical water within the range of 200°C to 300°C may exhibit lipophilicity substantially comparable to that of methanol or acetone at room temperature due to its significantly reduced relative permittivity, and may have an ionic product on the order of 10⁻¹¹ mol/L, which is 10⁻¹⁴ mol/L at room temperature, indicating that its concentration of hydrogen ions and hydroxide ions is 30 times higher than that of water at room temperature. For this reason, subcritical water especially at from 200°C to 300°C is known to show reactivity different from that of water at room temperature. In the decomposition method of the disclosure, the temperature of subcritical water in the decomposition step is lower than 250°C, preferably 245°C or lower, more preferably 240°C or lower, still more preferably 235°C or lower, while it is 180°C or higher, preferably 200°C or higher, more preferably 205°C or higher, still more preferably 210°C or higher, even more preferably 215°C or higher, particularly preferably 220°C or higher, further particularly preferably 225°C or higher.

Water used to prepare subcritical water may be any water such as tap water, ion-exchanged water, distilled water, or well water. Ion-exchanged water and distilled water are preferred in terms of suppression of side reactions caused by salts and the like present in water. Water is used in an amount that is enough to soak the fluorine-containing polymer to be treated. Here, attention needs to be paid to the amount of water as a significantly small amount of water introduced into an airtight container for pressurization causes water after heating to fully vaporize rather than transiting into the state of subcritical water.

In the decomposition method of the disclosure, at least one basic compound selected from the group consisting of alkali metal hydroxides and alkaline earth metal hydroxides is used. As already mentioned, the at least one basic compound is used to abstract HF from a fluorine-containing polymer.

Examples of the alkali metal hydroxides include lithium hydroxide, sodium hydroxide, potassium hydroxide, and cesium hydroxide. Specifically, the at least one basic compound is preferably at least one of sodium hydroxide or potassium hydroxide. Potassium hydroxide is known to be more active and basic than sodium hydroxide in concentrated solutions, and is expected to be highly active in the HF abstraction reaction. It has actually been confirmed in the disclosure that potassium hydroxide is more active than sodium hydroxide in decomposition of a fluorine-containing polymer. From such a point of view, potassium hydroxide is most preferred.

Examples of the alkaline earth metal hydroxides include calcium hydroxide and barium hydroxide.

The concentration of the at least one basic compound in subcritical water is 0.5 M or lower, preferably 0.45 M or lower, more preferably 0.40 M or lower, still more preferably 0.35 M or lower, while it is preferably 0.01 M or higher, more preferably 0.05 M or higher, still more preferably 0.10 M or higher, even more preferably 0.15 M or higher. As is well known to those skilled in the art, the unit "M" means mol/L.

The pH of the subcritical water is preferably 12 or higher, more preferably 12.7 or higher, still more preferably 13 or higher, while it is preferably 13.7 or lower, more preferably 13.6 or lower, still more preferably 13.5 or lower.

The method that reacts a fluorine-containing polymer in subcritical water containing basic compound is now described. Water, basic compound, and a fluorine-containing polymer to be treated are placed in a pressure vessel of a size appropriate for the amount of the fluorine-containing polymer to be treated, and the interior of the pressure vessel is pressurized and sealed. To pressurize the interior of the pressure vessel, gas is introduced into the pressure vessel. Examples of the gas include air, argon, and nitrogen. The interior of the pressure vessel can be pressurized to, but is not limited to, about 0.5 MPa.

The pressure vessel that has undergone the process above is heated to initiate the decomposition reaction. The temperature for heating is lower than 250°C, preferably 245°C or lower, more preferably 240°C or lower, still more preferably 235°C or lower, while it is 180°C or higher, preferably 200°C or higher, more preferably 205°C or higher, still more preferably 210°C or higher, even more preferably 215°C or higher, particularly preferably 220°C or higher, further particularly preferably 225°C or higher. The pressure vessel is heated with a heating unit if including one. If the pressure vessel includes no heating unit, the entire pressure vessel may be heated in an autoclave or an oven. The reaction duration may be from 6 to 24 hours, for example.

The aqueous solution after the decomposition reaction contains fluoride ions that have resulted from fluorine atoms contained in the fluorine-containing polymer. The decomposition method of the disclosure preferably includes, after the decomposition step, a recovery step of recovering calcium fluoride generated by adding calcium hydroxide to an aqueous solution after the decomposition. The fluoride ions contained in the aqueous solution after the decomposition react with calcium ions resulting from the added calcium hydroxide to be converted into calcium fluoride, which can be a raw material for all fluorine compounds. The decomposition method of the disclosure including the recovery step above enables effective use of resources. Furthermore, the method for decomposing a fluorine-containing polymer of the disclosure, which can suppress the generation of impurities after the decomposition reaction as described above, can also reduce the amount of impurities in recovering calcium fluoride.

The aqueous solution after the decomposition reaction contains, as well as the fluoride ions, a polymer decomposition product remaining after HF has been abstracted. This decomposition product is seemingly elemental carbon with a double bond as mentioned above, and is often black in color. The decomposition product can be easily separated since it is a solid, and can also be easily disposed of by incineration since the fluorine atoms have been removed in the recovery step above.

The decomposition method of the disclosure preferably includes, before the decomposition step, a pulverization step of pulverizing the fluorine-containing polymer into pulverized particles having a maximum linear length of 3 mm or less. The decomposition method of the disclosure including the pulverization step above facilitates decomposition of the fluorine-containing polymer.

The pulverization method is not limited. Examples thereof include freeze pulverization, disc milling, hammer milling, stone mill pulverization, and jet milling.

The pulverization temperature is preferably -200°C or higher, while it is preferably 90°C or lower, more preferably 40°C or lower, still more preferably 0°C or lower.

The maximum linear length of the pulverized particles of the fluorine-containing polymer is preferably 3 mm or less, more preferably 2 mm or less, still more preferably 1 mm or less, particularly preferably 500 µm or less, while it is preferably 10 µm or more, more preferably 30 µm or more, still more preferably 100 µm or more. When the average particle size of the pulverized particles of the fluorine-containing polymer is within the range above, the fluorine-containing polymer can be more easily decomposed.

The maximum linear length was determined by observing 100 or more secondary particles using an SEM image and measuring the major axis of each secondary particle. The longest major axis among the measured major axes was determined as the maximum linear length.

The aqueous solution after the decomposition reaction can be subjected to transmittance measurement using an Agilent Cary 7000 UMS. Here, the average value of %T from 380 to 780 nm was taken as the transmittance. A higher transmittance value indicates a lighter colored solution and fewer impurities.

The transmittance of the aqueous solution after the decomposition reaction is preferably 40%T or higher, more preferably 50%T or higher, still more preferably 70%T or higher. The upper limit is not limited and may be 100%T, but is usually about 90%T. With the transmittance of the aqueous solution after the decomposition reaction falling within the range above, the amount of impurities contained in the calcium fluoride generated by adding calcium hydroxide to the aqueous solution after the decomposition can be reduced after the decomposition step.

The fluorine-containing polymer to be decomposed in the disclosure is a polymer that contains a fluorine atom in its molecule. Any polymer containing even one fluorine atom in its molecule is encompassed by the fluorine-containing polymer to be decomposed in the disclosure. Fluorine-containing polymers are highly valued for their excellent chemical resistance, heat resistance, weather resistance, and other properties, and are used in a wide range of fields, including industrial and medical fields. On the other hand, the high chemical stability and high thermal durability of these polymers mean that they are not easily decomposed. The disclosure provides a method for chemically decomposing these polymers. Such a fluorine-containing polymer is preferably one containing a hydrogen atom in its molecule. The fluorine-containing polymer may be a fluororesin or a fluororubber, and may be a homopolymer or a copolymer.

Examples of the fluororesin include polytetrafluoroethylene (PTFE), a tetrafluoroethylene (TFE)/perfluoro(alkyl vinyl ether) (PAVE) copolymer (PFA), a TFE/hexafluoropropylene (HFP) copolymer (FEP), an ethylene (Et)/TFE copolymer (ETFE), an Et/TFE/HFP copolymer (EFEP), polychlorotrifluoroethylene (PCTFE), a chlorotrifluoroethylene (CTFE)/TFE copolymer, a CTFE/TFE/PAVE copolymer, an Et/CTFE copolymer, polyvinyl fluoride (PVF), polyvinylidene fluoride (PVdF), a vinylidene fluoride (VdF)/TFE copolymer, a VdF/HFP copolymer, a VdF/TFE/HFP copolymer, a VdF/HFP/(meth)acrylic acid copolymer, a VdF/CTFE copolymer, a VdF/pentafluoropropylene copolymer, a VdF/PAVE/TFE copolymer, and a TFE/perfluoroalkyl allyl ether copolymer. The perfluoroalkyl allyl ether is a monomer represented by CF₂=CFCF₂-O-Rf⁴ (wherein Rf⁴ is a C1-C5 perfluoroalkyl group) .

The fluororesin may be a partially fluorinated polymer or a perfluoropolymer. Preferred is the partially fluorinated polymer.

The fluororesin is preferably at least one selected from the group consisting of ETFE, EFEP, an Et/CTFE copolymer, PVF, PVdF, a VdF/TFE copolymer, a VdF/HFP copolymer, a VdF/TFE/HFP copolymer, a VdF/HFP/(meth)acrylic acid copolymer, a VdF/CTFE copolymer, a VdF/pentafluoropropylene copolymer, and a VdF/PAVE/TFE copolymer, more preferably a VdF/HFP copolymer or a VdF/TFE/HFP copolymer.

The perfluoroalkyl group in the PAVE preferably has 1 to 10 carbon atoms, more preferably 1 to 5 carbon atoms. Examples of the perfluoroalkyl group include a perfluoromethyl group, a perfluoroethyl group, a perfluoropropyl group, a perfluorobutyl group, a perfluoropentyl group, and a perfluorohexyl group. Preferred is perfluoro(propyl vinyl ether) (PPVE) wherein the perfluoroalkyl group is a perfluoropropyl group.

Examples of the fluororubber include a partially fluorinated rubber and a perfluororubber. A partially fluorinated rubber is preferred.

Examples of the partially fluorinated rubber include a vinylidene fluoride (VdF)-based fluororubber, a tetrafluoroethylene (TFE)/propylene (Pr)-based fluororubber, a tetrafluoroethylene (TFE)/propylene/vinylidene fluoride (VdF)-based fluororubber, an ethylene/hexafluoropropylene (HFP)-based fluororubber, an ethylene/hexafluoropropylene (HFP)/vinylidene fluoride (VdF)-based fluororubber, and an ethylene/hexafluoropropylene (HFP)/tetrafluoroethylene (TFE)-based fluororubber. Preferred among these is at least one selected from the group consisting of a vinylidene fluoride-based fluororubber and a tetrafluoroethylene/propylene-based fluororubber, and more preferred is a vinylidene fluoride-based fluororubber.

The vinylidene fluoride-based fluororubber is preferably a copolymer containing 45 to 85 mol% vinylidene fluoride and 55 to 15 mol% at least one different monomer copolymerizable with vinylidene fluoride. Preferred is a copolymer containing 50 to 80 mol% vinylidene fluoride and 50 to 20 mol% at least one different monomer copolymerizable with vinylidene fluoride.

The amounts of the respective monomers constituting the fluoropolymer herein can be calculated by appropriate combination of NMR, FT-IR, elemental analysis, and X-ray fluorescence analysis according to the types of the monomers.

Examples of the at least one different monomer copolymerizable with vinylidene fluoride include tetrafluoroethylene (TFE), hexafluoropropylene (HFP), a fluoroalkyl vinyl ether, trifluoroethylene, trifluoropropylene, pentafluoropropylene, trifluorobutene, tetrafluoroisobutene, hexafluoroisobutene, vinyl fluoride, a perfluoroalkyl allyl ether, a fluoromonomer represented by the formula (6): CH₂=CFRf⁶¹ (wherein Rf⁶¹ is a C1-C12 linear or branched fluoroalkyl group), a fluoromonomer represented by the formula (7): CH₂=CH-(CF₂)ₙ-X² (wherein X² is H or F and n is an integer of 3 to 10), a monomer giving a cross-linking site; and non-fluorinated monomers such as ethylene, propylene, and an alkyl vinyl ether. Each of these can be used alone or in any combination. At least one selected from the group consisting of TFE, HFP, and a fluoroalkyl vinyl ether is preferably used among these. HFP is more preferably used.

The fluoroalkyl vinyl ether preferably includes at least one selected from the group consisting of a fluoromonomer represented by the formula (8):

CF₂=CF-ORf⁸¹

(wherein Rf⁸¹ is a C1-C8 perfluoroalkyl group), a fluoromonomer represented by the formula (9):

CF₂=CFOCF₂ORf⁹¹

(wherein Rf⁹¹ is a C1-C6 linear or branched perfluoroalkyl group, a C5-C6 cyclic perfluoroalkyl group, or a C2-C6 linear or branched perfluorooxyalkyl group containing 1 to 3 oxygen atom(s)), and a fluoromonomer represented by the formula (10):

CF₂=CFO(CF₂CF(Y¹⁰)O)ₘ(CF₂)ₙF

(wherein Y¹⁰ is a fluorine atom or a trifluoromethyl group, m is an integer of 1 to 4, and n is an integer of 1 to 4). More preferred is a fluoromonomer represented by the formula (8).

The perfluoroalkyl allyl ether is preferably a fluoromonomer represented by the formula (11):

CF₂=CF-CF₂ORf¹¹¹

(wherein Rf¹¹¹ is a C1-C5 perfluoroalkyl group).

Specific examples of the vinylidene fluoride-based fluororubber include a VdF/HFP-based rubber, a VdF/HFP/TFE-based rubber, a rubber based on VdF and a fluoromonomer rubber represented by the formula (6), a rubber based on VdF, a fluoromonomer represented by the formula (6), and TFE, a VdF/perfluoro(methyl vinyl ether) (PMVE)-based rubber, a VdF/PMVE/TFE-based rubber, and a VdF/PMVE/TFE/HFP-based rubber. The rubber based on VdF and a fluoromonomer represented by the formula (6) is preferably VdF/CH₂=CFCF₃ rubber. The rubber based on VdF, a fluoromonomer represented by the formula (6), and TFE is preferably VdF/TFE/CH₂=CFCF₃ rubber.

The VdF/CH₂=CFCF₃-based rubber is preferably a copolymer containing 40 to 99.5 mol% VdF and 0.5 to 60 mol% CH₂=CFCF₃, more preferably a copolymer containing 50 to 85 mol% VdF and 15 to 50 mol% CH₂=CFCF₃.

The tetrafluoroethylene/propylene-based fluororubber is preferably a copolymer containing 45 to 70 mol% tetrafluoroethylene, 55 to 30 mol% propylene, and 0 to 5 mol% fluoromonomer giving a cross-linking site.

The monomer giving a cross-linking site is a monomer (cure-site monomer) containing a cross-linkable group that can give a fluoropolymer a cross-linking site to form a cross-link with use of a cross-linking agent.

The monomer giving a cross-linking site preferably includes at least one selected from the group consisting of:
a fluoromonomer represented by the formula (12):

   CX³₂=CX³-R_{f}¹²¹CHR¹²¹X⁴
(wherein X³ is a hydrogen atom, a fluorine atom, or CH₃; R_{f}¹²¹ is a fluoroalkylene group, a perfluoroalkylene group,
a fluoro(poly)oxyalkylene group, or a perfluoro(poly)oxyalkylene group; R¹²¹ is a hydrogen atom or CH₃; and X⁴ is an iodine atom or a bromine atom);
   a fluoromonomer represented by the formula (13):

   CX³₂=CX³-R_{f}¹³¹X⁴
(wherein X³ is a hydrogen atom, a fluorine atom, or CH₃; R_{f}¹³¹ is a fluoroalkylene group, a perfluoroalkylene group,
a fluoropolyoxyalkylene group, or a perfluoropolyoxyalkylene group; and X⁴ is an iodine atom or a bromine atom);
   a fluoromonomer represented by the formula (14):

   CF₂=CFO(CF₂CF(CF₃)O)ₘ(CF₂)ₙ-X⁵
(wherein m is an integer of 0 to 5; n is an integer of 1 to 3; and X⁵ is a cyano group, a carboxy group, an alkoxycarbonyl group, an iodine atom, a bromine atom, or - CH₂I);
   a fluoromonomer represented by the formula (15):

   CH₂=CFCF₂O(CF(CF₃)CF₂O)ₘ(CF(CF₃))ₙ-X⁶
(wherein m is an integer of 0 to 5; n is an integer of 1 to 3; X⁶ is a cyano group, a carboxy group, an alkoxycarbonyl group, an iodine atom, a bromine atom, or -CH₂OH), and
   a monomer represented by the formula (16):

   CR¹⁶²R¹⁶³=CR¹⁶⁴-Z-CR¹⁶⁵=CR¹⁶⁶R¹⁶⁷
(wherein R¹⁶², R¹⁶³, R¹⁶⁴, R¹⁶⁵, R¹⁶⁶, and R¹⁶⁷ are the same as or different from each other, and are each a hydrogen atom or a C1-C5 alkyl group; Z is a C1-C18 linear or branched alkylene group optionally containing an oxygen atom, a C3-C18 cycloalkylene group, a C1-C10 alkylene or oxyalkylene group that is at least partially fluorinated, or a (per) fluoropolyoxyalkylene group represented by -(Q)ₚ-CF₂O-(CF₂CF₂O)ₘ(CF₂O)ₙ-CF₂-(Q)ₚ- (wherein Q is an alkylene group or an oxyalkylene group; p is 0 or 1; and m/n is 0.2 to 5) and having a molecular weight of 500 to 10000).

X³ is preferably a fluorine atom. R_{f}¹²¹ and R_{f}¹³¹ are preferably C1-C5 perfluoroalkylene groups. R¹²¹ is preferably a hydrogen atom. X⁵ is preferably a cyano group, an alkoxycarbonyl group, an iodine atom, a bromine atom, or -CH₂I. X⁶ is preferably a cyano group, an alkoxycarbonyl group, an iodine atom, a bromine atom, or - CH₂OH.

The monomer giving a cross-linking site preferably includes at least one selected from the group consisting of CF₂=CFOCF₂CF(CF₃)OCF₂CF₂CN, CF₂=CFOCF₂CF(CF₃)OCF₂CF₂COOH, CF₂=CFOCF₂CF(CF₃)OCF₂CF₂CH₂I, CF₂=CFOCF₂CF₂CH₂I, CH₂=CFCF₂OCF(CF₃)CF₂OCF(CF₃)CN, CH₂=CFCF₂OCF(CF₃)CF₂OCF(CF₃)COOH, CH₂=CFCF₂OCF(CF₃)CF₂OCF(CF₃)CH₂OH, CH₂=CHCF₂CF₂I, CH₂=CH(CF₂)₂CH=CH₂, CH₂=CH(CF₂)₆CH=CH₂, and CF₂=CFO(CF₂)₅CN, more preferably at least one selected from the group consisting of CF₂=CFOCF₂CF(CF₃)OCF₂CF₂CN and CF₂=CFOCF₂CF₂CH₂I.

In order to achieve excellent compression set performance at high temperature, the fluororubber preferably has a glass transition temperature of -70°C or higher, more preferably -60°C or higher, still more preferably -50°C or higher. In order to achieve good cold resistance, the fluororubber has a glass transition temperature of preferably 5°C or lower, more preferably 0°C or lower, still more preferably -3°C or lower.

The glass transition temperature can be determined as follows. Specifically, using a differential scanning calorimeter (DSC822e available from Mettler-Toledo International Inc.), 10 mg of a sample is heated at a rate of 10°C/min to give a DSC curve, and the temperature is read at the intermediate point of two intersections between each of the extension lines of the base lines before and after the secondary transition of the DSC curve and the tangent line at the inflection point of the DSC curve.

In order to achieve good heat resistance, the fluororubber preferably has a Mooney viscosity ML₍₁₊₂₀₎ at 170°C of 30 or higher, more preferably 40 or higher, still more preferably 50 or higher. In order to achieve good processibility, the fluororubber preferably has a Mooney viscosity ML₍₁₊₂₀₎ at 170°C of 150 or lower, more preferably 120 or lower, still more preferably 110 or lower.

In order to achieve good heat resistance, the fluororubber preferably has a Mooney viscosity ML₍₁₊₂₀₎ at 140°C of 30 or higher, more preferably 40 or higher, still more preferably 50 or higher. In order to achieve good processibility, the fluororubber preferably has a Mooney viscosity ML₍₁₊₂₀₎ at 140°C of 180 or lower, more preferably 150 or lower, still more preferably 110 or lower.

In order to achieve good heat resistance, the fluororubber preferably has a Mooney viscosity ML₍₁₊₁₀₎ at 100°C of 10 or higher, more preferably 20 or higher, still more preferably 30 or higher. In order to achieve good processibility, the fluororubber preferably has a Mooney viscosity ML₍₁₊₁₀₎ at 100°C of 120 or lower, more preferably 100 or lower, still more preferably 80 or lower.

The Mooney viscosity can be determined using a Mooney viscometer MV2000E available from Alpha Technologies Inc. at 170°C, 140°C, or 100°C in conformity with JIS K 6300.

In the decomposition method of the disclosure, the fluorine-containing polymer to be decomposed in the decomposition step may be a cross-linked material of a composition containing the fluororubber. The composition preferably contains the fluororubber and a cross-linking agent.

Examples of the cross-linking agent include those to be used in peroxide cross-linking, polyol cross-linking, polyamine cross-linking, triazine cross-linking, oxazole cross-linking, imidazole cross-linking, and thiazole cross-linking. In the case where the fluororubber contains a cyano group (-CN group), the cross-linking agent preferably includes at least one selected from the group consisting of oxazole cross-linking agents, imidazole cross-linking agents, and thiazole cross-linking agents.

The cross-linking agent used in peroxide cross-linking is an organic peroxide that can easily generate a peroxy radical in the presence of heat or a redox system. Examples thereof include 2,5-dimethyl-2,5-di(t-butylperoxy)hexane. Usually, the type and amount of the organic peroxide are selected in consideration of the amount of active -O-O- and the decomposition temperature.

The cross-linking aid that can be used in this case is a compound having reactivity with a peroxy radical and a polymer radical. Examples thereof include multifunctional compounds containing a functional group such as -CH=CH₂, - CH₂CH=CH₂, -CF=CF₂, -C(CF₃)CF₂, -C(CH₃)=CF₂, -CF=CF(CF₃), - CF=CF(CH₃), -C(C₆H₅)=CF₂, -CF=CF(C₆H₅), -CH=CF₂, -CF=CHF, - C(CF₃)=CHF, -CF=CH(CF₃), and -CH=CF(CF₃) ("C₆H₅" in each formula represents a phenyl group). Specific examples thereof include triallyl cyanurate, triallyl isocyanurate (TAIC), triacrylformal, triallyl trimellitate, N,N'-n-phenylene bismaleimide, dipropargyl terephthalate, diallyl phthalate, tetraallyl terephthalate amide, triallyl phosphate, bismaleimide, fluorinated triallyl isocyanurate (1,3,5-tris(2,3,3-trifluoro-2-propenyl)-1,3,5-triazine-2,4,6-trione), tris(diallylamine)-S-triazine, triallyl phosphite, N,N-diallyl acrylamide, and 1,6-divinyl dodecafluorohexane.

The cross-linking aid used together with the peroxide cross-linking agent may be a compound represented by the following formula (48): 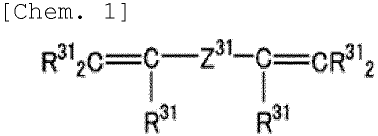 (wherein six R³¹s are each independently H, a halogen atom, or a C1-C5 optionally halogenated group into which an ether bond is optionally inserted; and Z³¹ is a C1-C18 optionally halogenated linear or branched alkylene, cycloalkylene, or (per)fluoropolyoxyalkylene group optionally containing a heteroatom).

Examples of the compound represented by the formula (48) include: a compound represented by the following formula (49): 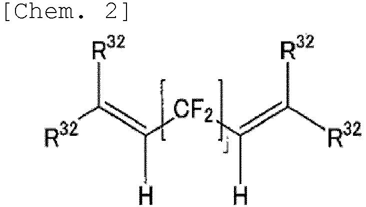 (wherein j is an integer of 2 to 10, preferably 4 to 8; and four R³²s are each independently H, F, or a C1-C5 alkyl or (per)fluoroalkyl group); a compound represented by the following formula (50): 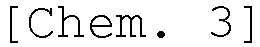 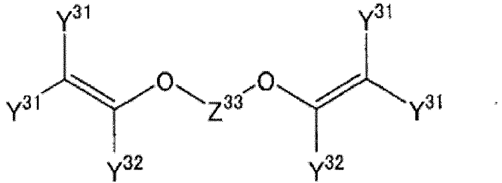 (wherein Y³¹s are each independently F, Cl or H; Y³²s are each independently F, Cl, H or OR³³ (wherein R³³ is a branched or linear alkyl group that may be partially, substantially, or completely fluorinated or chlorinated); and Z³³ is an optionally fluorinated, C2-C10 divalent group into which an ether bond is optionally inserted; Z³³ is preferably a group represented by -(CF₂)ₘ- wherein m is an integer of 3 to 5; and the compound represented by the formula (50) is preferably F₂C=CF-O-(CF₂)₅-O-CF=CF₂); and a compound represented by the following formula (51): 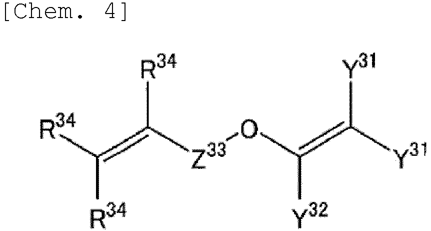 (wherein Y³¹, Y³², and Z³³ are as defined above; and R³⁴s are each independently H, F, or a C1-C5 alkyl or (per)fluoroalkyl group).

Examples of a cross-linking aid to be used together with the cross-linking agent or the peroxide cross-linking agent include a compound containing at least one structure represented by the following formula (52): 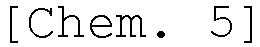 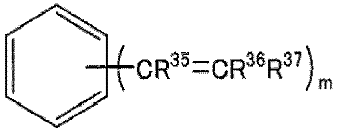 (wherein R³⁵ to R³⁷ are each independently a hydrogen atom, a fluorine atom, an alkyl group, a fluorinated alkyl group, or a substituted or non-substituted aryl group, at least one selected from R³⁵ to R³⁷ is a fluorine atom or a group containing a fluorine atom; m is an integer of 1 to 5; when m is 2 or greater, the m R³⁵s to R³⁷s may be the same as or different from each other; and hydrogen atom(s) in the benzene ring may be replaced). When m is **1,** the compound preferably contains two or more of the structures.

Examples of the compound containing a structure represented by the formula (52) include a compound represented by the following formula (53): 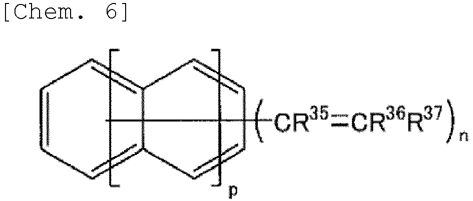 (wherein R³⁵ to R³⁷ are as defined above; p is an integer of 0 to 2; and n is an integer of 2 to 6): and a compound represented by the following formula (54): 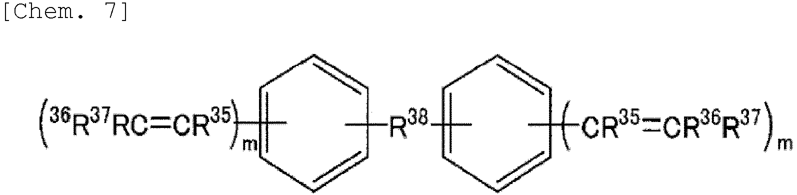 (wherein R³⁵ to R³⁷ are as defined above; R³⁸ is a single bond, -SO₂-, -O-, -S-, -CO-, a hetero atom-containing group, a substituted or non-substituted alkylene group, a substituted or non-substituted cycloalkylene group, or a substituted or non-substituted arylene group; m is an integer of 1 to 5; and each of these groups may be partially or completely fluorinated).

Any hetero atom-containing group that is a divalent group containing a hetero atom may be used. Examples of hetero atoms include an oxygen atom, a nitrogen atom, a sulfur atom, a boron atom, and a phosphorus atom.

Examples of the cross-linking agent used in polyol cross-linking include polyhydric alcohol compounds such as bisphenol A and bisphenol AF.

Examples of the cross-linking agent used in polyamine cross-linking include polyamine compounds such as hexamethylenediamine carbamate, N,N'-dicinnamylidene-1,6-hexanediamine, and 4,4'-bis(aminocyclohexyl)methanecarbamate.

Examples of cross-linking agents used in oxazole cross-linking, imidazole cross-linking, and thiazole cross-linking include bisdiaminophenyl-based cross-linking agents, bisaminophenol-based cross-linking agents, and bisaminothiophenol-based cross-linking agents represented by the following formula (55): 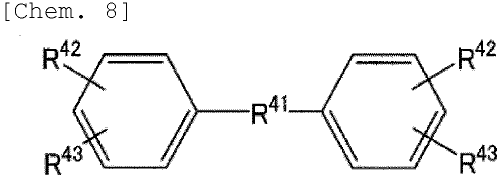 (wherein R⁴¹ is -SO₂-, -O-, -CO-, a C1-C6 alkylene group, a C1-C10 perfluoroalkylene group, or a single bond, or a group represented by the following formula: 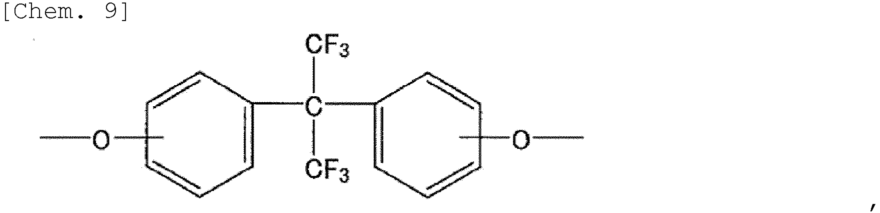 one of R⁴² or R⁴³ is -NH₂ and the other is -NHR⁴⁴, - NH₂, -OH, or -SH; and R⁴⁴ is a hydrogen atom, a fluorine atom, or a monovalent organic group; preferably, R⁴² is -NH₂ and R⁴³ is -NHR⁴⁴).

Preferred specific examples of the C1-C6 alkylene group include methylene, ethylene, propylene, butylene, pentylene, and hexylene groups. An example of the C1-C10 perfluoroalkylene group is a group represented by the following formula:

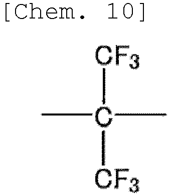

These compounds are known as examples of bisdiaminophenyl compounds from JP H02-59177 B and JP H08-120146 A.

Examples of cross-linking agents used in oxazole cross-linking, imidazole cross-linking, and thiazole cross-linking also include bisamidrazone-based cross-linking agents represented by the following formula (56): 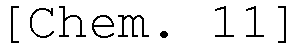 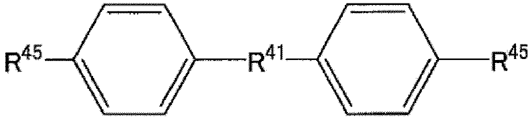 (wherein R⁴¹ is as defined above; and R⁴⁵s are each independently any of the groups represented by the following formulas:
bisamidrazone-based cross-linking agents represented by 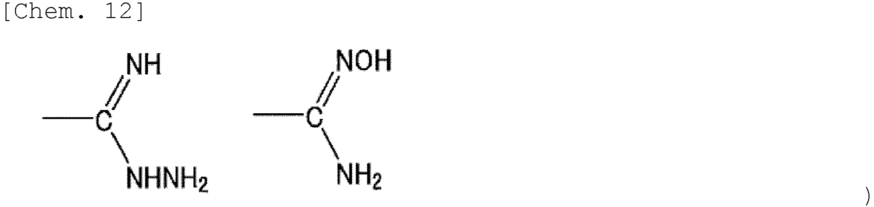 ,
amidrazone-based cross-linking agents represented by the following formula (57): 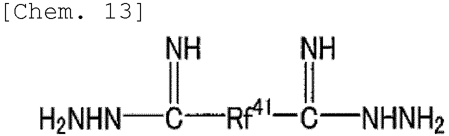
(wherein Rf⁴¹ is a C1-C10 perfluoroalkylene group), bisamidoxime-based cross-linking agents represented by the following formula (58): 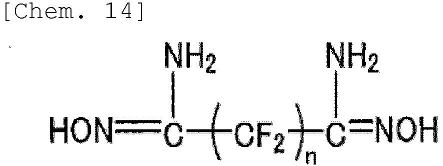
(wherein n is an integer of 1 to 10), a compound represented by the formula (59): HN=CR⁴⁵R⁴⁶
(wherein R⁴⁵ is selected from the group consisting of H, NH₂, and NHR⁴⁷; and R⁴⁶ is selected from the group consisting of Ph, SO₂H, NR⁴⁸R⁴⁹, 2-pyridine, and CH₂CONH₂, where R⁴⁷ is selected from the group consisting of Ph, NH₂,
and CN; R⁴⁸ is selected from the group consisting of H, NHPh, CH₂CONH₂, a C1-C8 linear alkyl group, and a C1-C8 branched alkyl group; and R⁴⁹ is selected from the group consisting of Ph, COOC(CH₃)₃, NH₂, CH₂COOH, CSNH₂, CNHNH₃⁺Cl⁻, p-phenyl CN, 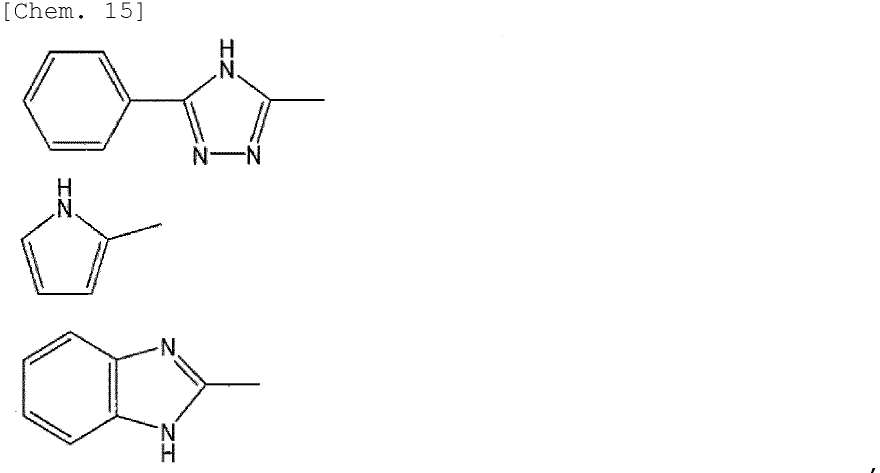
and COPh) .

These bisaminophenol-based cross-linking agents, bisaminothiophenol-based cross-linking agents, bisdiaminophenyl-based cross-linking agents have been conventionally used in a cross-linking system in which the cross-linking site is a cyano group, and also react with a carboxyl group and an alkoxycarbonyl group and form an oxazole ring, a thiazole ring, and an imidazole ring, respectively, to give a cross-linked product.

Examples of the cross-linking agents further include cross-linking agents represented by the formula (60): X⁴¹-(CH₂)ₙ-R⁵⁰-(CH₂)ₘ-X⁴¹ (wherein X⁴¹s are each independently an alkyne group, a nitrile group, or Y⁴¹_{P}N₃ (where Y⁴¹ is SO, SO₂, C₆H₄, or CO; and p is 0 or 1); n and m are each independently an integer of 1 to 4; and R⁵⁰ is selected from the group consisting of:
i) a C3-C10 fluoroalkylene group,
ii) a C3-C10 fluoroalkoxylene group,
iii) a substituted arylene group,
iv) an oligomer containing a copolymerized unit of vinylidene fluoride and perfluoro(methyl vinyl ether),
v) an oligomer containing a copolymerized unit of vinylidene fluoride and hexafluoropropylene,
vi) an oligomer containing a copolymerized unit of tetrafluoroethylene and perfluoro(methyl vinyl ether), and
vii) an oligomer containing a copolymerized unit of tetrafluoroethylene and a hydrocarbon olefin). The cross-linking agent is preferably used together with a fluororubber containing a nitrile, azide, sulfonylazide, carbonylazide, or alkyne group. For example, the nitrile group of the fluororubber reacts with the azide group of the cross-linking agent to form a tetrazole ring, whereby a cross-linked product is provided.

The cross-linking agent is particularly preferably a compound containing multiple 3-amino-4-hydroxyphenyl or 3-amino-4-mercaptophenyl groups, or a compound represented by the following formula (61): 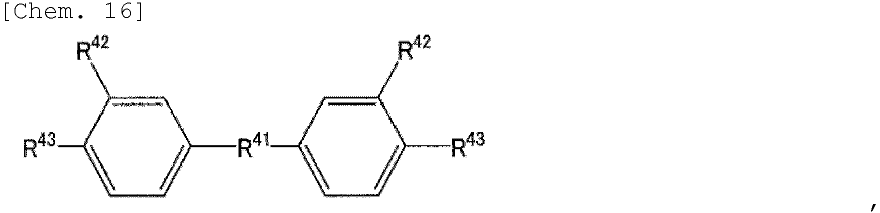 wherein R⁴¹, R⁴² and R⁴³ are as defined above. Specific examples include 2,2-bis(3-amino-4-hydroxyphenyl)hexafluoropropane (common name: bis(aminophenol) AF), 2,2-bis(3-amino-4-mercaptophenyl)hexafluoropropane, tetraaminobenzene, bis-3,4-diaminophenylmethane, bis-3,4-diaminophenyl ether, 2,2-bis(3,4-diaminophenyl)hexafluoropropane, 2,2-bis[3-amino-4-(N-phenylamino)phenyl]hexafluoropropane, 2,2-bis[3 -amino-4-(N-methylamino)phenyl]hexafluoropropane, 2,2-bis[3-amino-4-(N-ethylamino)phenyl]hexafluoropropane, 2,2-bis[3-amino-4-(N-propylamino)phenyl]hexafluoropropane, 2,2-bis[3-amino-4-(N-perfluorophenylamino)phenyl]hexafluoropropane, and 2,2-bis[3-amino-4-(N-benzylamino)phenyl]hexafluoropropane.

Preferred among these as the cross-linking agent is 2,2-bis[3-amino-4-(N-phenylamino)phenyl]hexafluoropropane from the viewpoint of heat resistance, steam resistance, amine resistance, and good cross-linking properties.

The amount of the cross-linking agent is preferably 0.01 to 10 parts by mass, more preferably 0.05 to 5 parts by mass, per 100 parts by mass of the fluororubber.

The composition may contain common fillers.

Examples of common fillers include: imide-based fillers having an imide structure such as polyimide, polyamideimide, and polyetherimide; organic fillers made of engineering plastics such as polyarylate, polysulfone, polyether sulfone, polyphenylene sulfide, polyether ether ketone, polyether ketone, and polyoxybenzoate; metal oxide fillers such as aluminum oxide, silicon oxide, and yttrium oxide; metal carbides such as silicon carbide and aluminum carbide; metal nitride fillers such as silicon nitride and aluminum nitride; and inorganic fillers such as aluminum fluoride, fluorocarbon, and carbon black.

Preferred among these are aluminum oxide, yttrium oxide, silicon oxide, polyimide, fluorocarbon, silicon carbide, silicon nitride, aluminum nitride, and carbon black.

One type of the inorganic filler or organic filler may be compounded alone, or two or more types thereof may be compounded in combination.

The amount of the common fillers is preferably 0.5 to 100 parts by mass, more preferably 5 to 50 parts by mass, per 100 parts by mass of the fluororubber.

Especially in fields where high purity and non-contamination properties are not required, to the composition may be added common additives conventionally compounded to fluorine-containing polymer compositions as needed, such as fillers, processing aids, plasticizers, and colorants. One or more commonly used cross-linking agents or cross-linking aids different from those described above may be compounded.

The composition can be produced by kneading the fluororubber, the cross-linking agent, and optionally the cross-linking accelerator and the filler.

The kneading can be performed using a common processing machine for polymers, such as an open roll mill, a Banbury mixer, a kneader, or a closed mixer.

The cross-linked material can be produced by molding the composition and cross-linking the resulting molded article, or by performing molding and cross-linking simultaneously.

Any molding method may be employed such as compression molding, extrusion molding, transfer molding, or injection molding.

The cross-linking conditions are preferably determined according to the type of the cross-linking agent used. For example, cross-linking is preferably carried out at a temperature of 140°C to 300°C for 1 minute to 24 hours. Cross-linking can be performed under normal pressure, increased pressure, or reduced pressure, or in the air.

The cross-linking method may be, but is not limited to, steam cross-linking, pressure molding, or a usual method in which the cross-linking reaction is initiated by heating. It may be radiation cross-linking at normal temperature and normal pressure.

Only the initial cross-linking treatment (primary cross-linking) may be carried out. Alternatively, posttreatment referred to as secondary cross-linking may be carried out after the primary cross-linking.

When the primary cross-linking and the secondary cross-linking are carried out, the primary cross-linking is preferably carried out at 150°C to 250°C for 5 to 120 minutes, more preferably at 170°C to 210°C for 5 to 60 minutes. The cross-linking means used may be a known cross-linking means, such as press cross-linking.

The secondary cross-linking is preferably carried out at 180°C to 320°C for 2 to 24 hours, more preferably at 280°C to 310°C for 5 to 20 hours. STEP cross-linking may be used. The cross-linking means used may be a known cross-linking means, such as oven cross-linking.

It should be appreciated that a variety of modifications and changes in the structure and other details may be made to the aforementioned embodiments without departing from the spirit and scope of the claims.

### EXAMPLES

The disclosure is further described based on examples. The disclosure is not limited to these examples.

The parameters in the examples were determined by the following methods.

### (1) Color of solution after decomposition reaction

The aqueous solution after the decomposition reaction was subjected to transmittance measurement using an Agilent Cary 7000 UMS. Here, the average of %T values at 380 to 780 nm was taken as the transmittance. A higher transmittance value indicates a lighter-colored solution and fewer impurities.

### (Production of cross-linked material of fluororubber composition)

The materials were mixed according to a composition shown in Table 1 and kneaded with an open roll to obtain fluororubber compositions 1 and 2. The obtained fluororubber composition 1 was pressed at 160°C for 10 minutes and then heat-treated in an oven at 180°C for 4 hours to obtain a cross-linked material 1. The fluororubber composition 2 was pressed at 170°C for 15 minutes and then heat-treated in an oven at 230°C for 24 hours to obtain a cross-linked material 2.

The materials shown in Table 1 are as follows.
Fluororubber 1: VdF/HFP = 78/22 (mol%), Mooney viscosity (ML₁₊₁₀ (100°C)) = 70
Fluororubber 2: VdF/HFP = 78/22 (mol%), Mooney viscosity (ML₁₊₁₀ (100°C)) = 57
Carbon black: product name "Thermax N990", available from Cancarb Limited
Cross-linking agent 1: Perhexa 25B (2,5-dimethyl-2,5-di(t-butylperoxy)hexane, available from NOF Corp.)
Cross-linking agent 2: bisphenol AF
Cross-linking aid: TAIC (triallyl isocyanurate, TAIC available from Nihon Kasei Co., Ltd.)
Cross-linking accelerator: 8-benzyl-1,8-diazabicyclo[5.4.0]-7-undecenium chloride (DBU-B)
Acid acceptor 1: calcium hydroxide (product name "CALDIC #2000", available from Kawamo & Co., Inc.)
Acid acceptor 2: magnesium oxide (product name "Kyowamag^{™} 150", available from Kyowa Chemical Industry Co., Ltd.)

### (Freeze pulverization of sample)

Freeze pulverization was carried out using "JFC-5000" available from Japan Analytical Industry Co., Ltd. A 75-mL sample container was charged with 10 mg of a sample and a stainless steel ball with a diameter of 250 mm and cooled with liquid nitrogen for 10 minutes, and then the sample was pulverized at 50 Hz and a pulverization temperature of -196°C for 10 minutes. This step was repeated twice, so that a powdered sample with a maximum linear length of 200 µm was obtained. The fluororubber 1 and the cross-linked materials 1 and 2 were pulverized by this procedure and used in the following examples and comparative examples.

### (Example 1)

A hot water reactor was charged with 30 mg of the cross-linked material 1 and 10 mL of a 0.1 M aqueous potassium hydroxide solution. The materials were pressurized to 0.5 MPa with argon gas and then reacted at 230°C for 6 hours. The pressure during the reaction was 3.4 MPa. After the reaction was completed, the contents were cooled to room temperature, and the fluoride ions generated in the aqueous phase were quantified by ion chromatography to determine the yield of fluoride ions. The results are shown in Table 2.

### (Example 2)

The reaction was carried out by a procedure similar to that in Example 1, except that a 0.2 M aqueous potassium hydroxide solution was used instead of the 0.1 M aqueous potassium hydroxide solution and the pressure during the reaction was changed from 3.4 MPa to 3.5 MPa. The results are shown in Table 2.

Furthermore, the aqueous solution after the reaction was centrifuged to remove the solids, and a stoichiometric amount of calcium hydroxide was added to the resulting aqueous phase, which was then washed with hydrochloric acid to obtain calcium fluoride.

### (Example 3)

A hot water reactor was charged with 30 mg of the cross-linked material 1 and 10 mL of a 0.1 M aqueous potassium hydroxide solution. The materials were pressurized to 0.5 MPa with argon gas and then reacted at 200°C for 18 hours. The pressure during the reaction was 2.3 MPa. After the reaction was completed, the contents were cooled to room temperature, and the fluoride ions generated in the aqueous phase were quantified by ion chromatography to determine the yield of fluoride ions. The results are shown in Table 2.

### (Example 4)

The reaction was carried out by a procedure similar to that in Example 1, except that a 0.3 M aqueous potassium hydroxide solution was used instead of the 0.1 M aqueous potassium hydroxide solution and the reaction duration was changed from 18 hours to 6 hours. The results are shown in Table 2.

### (Example 5)

A hot water reactor was charged with 30 mg of the fluororubber 1 and 10 mL of a 0.1 M aqueous potassium hydroxide solution. The materials were pressurized to 0.5 MPa with argon gas and then reacted at 230°C for 6 hours. The pressure during the reaction was 3.4 MPa. After the reaction was completed, the contents were cooled to room temperature, and the fluoride ions generated in the aqueous phase were quantified by ion chromatography to determine the yield of fluoride ions. The results are shown in Table 2.

### (Example 6)

A hot water reactor was charged with 30 mg of the cross-linked material 2 and 10 mL of a 0.2 M aqueous potassium hydroxide solution. The materials were pressurized to 0.5 MPa with argon gas and reacted at 200°C for 18 hours. The pressure during the reaction was 2.2 MPa. After the reaction was completed, the contents were cooled to room temperature, and the fluoride ions generated in the aqueous phase were quantified by ion chromatography to determine the yield of fluoride ions. The results are shown in Table 2.

### (Example 7)

A hot water reactor was charged with 30 mg of the fluororubber 1 and 10 mL of a 0.2 M aqueous sodium hydroxide solution. The materials were pressurized to 0.5 MPa with argon gas and reacted at 200°C for 18 hours. The pressure during the reaction was 2.3 MPa. After the reaction was completed, the contents were cooled to room temperature, and the fluoride ions generated in the aqueous phase were quantified by ion chromatography to determine the yield of fluoride ions. The results are shown in Table 2.

### (Example 8)

A hot water reactor was charged with 30 mg of the fluororubber 1 and 10 mL of a 0.2 M aqueous potassium hydroxide solution. The materials were pressurized to 0.5 MPa with argon gas and reacted at 200°C for 18 hours. The pressure during the reaction was 2.2 MPa. After the reaction was completed, the contents were cooled to room temperature, and the fluoride ions generated in the aqueous phase were quantified by ion chromatography to determine the yield of fluoride ions. The results are shown in Table 2.

### (Comparative Example 1)

A hot water reactor was charged with 30 mg of the cross-linked material 1 and 10 mL of a 0.3 M aqueous potassium hydroxide solution. The materials were pressurized to 0.5 MPa with argon gas and reacted at 250°C for 6 hours. The pressure during the reaction was 5.7 MPa. After the reaction was completed, the contents were cooled to room temperature, and the fluoride ions generated in the aqueous phase were quantified by ion chromatography to determine the yield of fluoride ions. The results are shown in Table 2.

### (Comparative Example 2)

A hot water reactor was charged with 30 mg of the fluororubber 1 and 10 mL of a 0.5 M aqueous potassium hydroxide solution. The materials were pressurized to 0.5 MPa with argon gas and reacted at 250°C for 6 hours. The pressure during the reaction was 4.4 MPa. After the reaction was completed, the contents were cooled to room temperature, and the fluoride ions generated in the aqueous phase were quantified by ion chromatography to determine the yield of fluoride ions. The results are shown in Table 2.

### (Comparative Example 3)

A hot water reactor was charged with 30 mg of the cross-linked material 1 and 10 mL of a 1.0 M aqueous potassium hydroxide solution. The materials were pressurized to 0.5 MPa with argon gas and reacted at 250°C for 6 hours. The pressure during the reaction was 4.2 MPa. After the reaction was completed, the contents were cooled to room temperature, and the fluoride ions generated in the aqueous phase were quantified by ion chromatography to determine the yield of fluoride ions. The results are shown in Table 2.

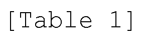

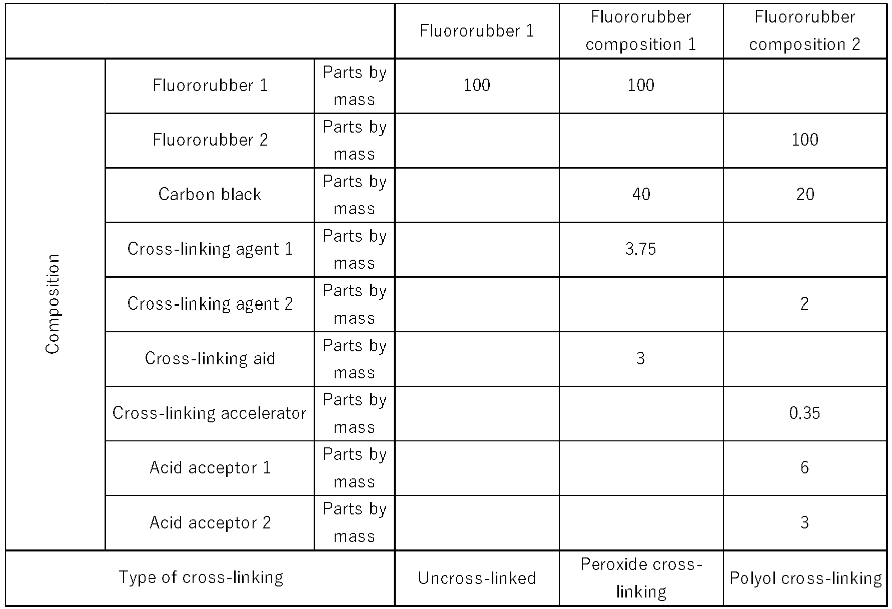

**[Table 2]**

| | | Example 1 | Example 2 | Example 3 | Example 4 | Example 5 | Example 6 | Example 7 | Example 8 | Comparative Example 1 | Comparative Example 2 | Comparative Example 3 |
|---|---|---|---|---|---|---|---|---|---|---|---|---|
| Fluororubber 1 | mg | | | | | 30 | | 30 | 30 | | 30 | |
| Cross-linked material 1 | mg | 30 | 30 | 30 | 30 | | | | | 30 | | 30 |
| Cross-linked material 2 | mg | | | | | | 30 | | | | | |
| Aqueous solution (KOH or NaOH) | mL | 10 | 10 | 10 | 10 | 10 | 10 | 10 | 10 | 10 | 10 | 10 |
| KOH | M | 0.1 | 0.2 | 0.1 | 0.3 | 0.1 | 0.2 | | 0.2 | 0.3 | 0.5 | 1.0 |
| NaOH | M | | | | | | | 0.2 | | | | |
| Reaction temperature | °C | 230 | 230 | 200 | 200 | 230 | 200 | 200 | 200 | 250 | 250 | 250 |
| Reaction pressure | MPa | 3.4 | 3.5 | 2.3 | 2.3 | 3.4 | 2.2 | 2.3 | 2.2 | 5.7 | 4.4 | 4.2 |
| Reaction duration | h | 6 | 6 | 18 | 6 | 6 | 18 | 18 | 18 | 6 | 6 | 6 |
| F⁻ yield | % | 63 | 100 | 60 | 86 | 72 | 97 | 52 | 100 | 100 | 100 | 99 |
| Transmittance of aqueous solution after reaction | %T | 70 | 54 | 70 | 57 | 79 | 46 | 87 | 52 | 34 | 24 | 3 |

## Claims

1. A method for decomposing a fluorine-containing polymer, comprising
a decomposition step including reacting a fluorine-containing polymer in subcritical water that is at a temperature of 180°C or higher and lower than 250°C and that contains at least one basic compound selected from the group consisting of alkali metal hydroxides and alkaline earth metal hydroxides at a concentration of 0.5 M or lower.

2. The method for decomposing a fluorine-containing polymer according to claim 1,
wherein the temperature of the subcritical water in the decomposition step is 200°C or higher.

3. The method for decomposing a fluorine-containing polymer according to claim 1 or 2,
wherein the fluorine-containing polymer is a fluororubber.

4. The method for decomposing a fluorine-containing polymer according to claim 3,
wherein the temperature of the subcritical water in the decomposition step is 200°C or higher and 235°C or lower,
the concentration of the at least one basic compound in the subcritical water is 0.10 M or higher and 0.35 M or lower, and
the fluororubber is a copolymer of 50 to 80 mol% vinylidene fluoride and 50 to 20 mol% hexafluoropropylene.

5. The method for decomposing a fluorine-containing polymer according to claim 3 or 4,
wherein the fluorine-containing polymer to be decomposed in the decomposition step is a cross-linked material of a composition containing the fluororubber.

6. The method for decomposing a fluorine-containing polymer according to any one of claims 1 to 5,
wherein the method comprises, before the decomposition step, a pulverization step of pulverizing the fluorine-containing polymer into pulverized particles having a maximum linear length of 3 mm or less.

7. The method for decomposing a fluorine-containing polymer according to any one of claims 1 to 6,
wherein the at least one basic compound is at least one of sodium hydroxide or potassium hydroxide.

8. The method for decomposing a fluorine-containing polymer according to any one of claims 1 to 7,
wherein the method comprises, after the decomposition step, a recovery step of recovering calcium fluoride generated by adding calcium hydroxide to an aqueous solution after the decomposition.
